# FASCICULE DE BREVET EUROPEEN

(11) **EP 3 574 052 B1**
(45) Date de publication et mention de la délivrance du brevet: **25.11.2020**
(21) Numéro de dépôt: 18702786.7
(22) Date de dépôt: 24.01.2018
(51) Int. Cl.: C09C 1/30, C08F 8/34, C08F 292/00, C08L 27/20, H01M 8/102, B01D 71/00, C08J 5/22

(54) **PARTICULES INORGANIQUES CONDUCTRICES DE PROTONS FLUORÉES ET UTILISATION DE CES PARTICULES DANS DES MEMBRANES CONDUCTRICES DE PROTONS**
FLUORIERTE PROTONENLEITENDE ANORGANISCHE TEILCHEN UND DEREN VERWENDUNG BEI PROTONENLEITENDEN MEMBRANEN
FLUORINATED PROTON-CONDUCTING INORGANIC PARTICLES AND USE OF SAID PARTICLES IN PROTON-CONDUCTING MEMBRANES

(30) Priorité: 25.01.2017 FR 1750607
(43) Date de publication de la demande: 04.12.2019
(73) Titulaire: Commissariat à l'énergie atomique et aux énergies alternatives, 75015 Paris (FR)
(72) Inventeur: BUVAT, Pierrick, 37250 Montbazon (FR); BIGARRÉ, Janick, 37000 Tours (FR); CELLIER, Julien, 37250 Veigne (FR); DRU, Delphine, 37250 Sorigny (FR)
(74) Mandataire: Brevalex
(86) Numéro de dépôt international: PCT/FR2018/050163
(87) Numéro de publication internationale: WO 2018/138434

(56) Documents cités:
- FR-A1- 2 917 733
- US-A1- 2008 233 451
- YIN, QUANYI ET AL: "Nitroxide-mediated polymerization of pentafluorostyrene initiated by PS-DEPN through the surface of APTMS modified fumed silica: towards functional nanohybrids", RSC ADVANCES, vol. 6, no. 63, 2016, pages 58260-58267, XP002773927, ISSN: 2046-2069, DOI: 10.1039/C6RA08973A

## Description

### DOMAINE TECHNIQUE

La présente invention se rapporte à des particules inorganiques conductrices de protons greffées par des chaînes polymériques constituées d'au moins un polymère spécifique dont le caractère hydrophile-hydrophobe est contrôlé par le choix des unités répétitives constitutives du polymère.

La présente invention se rapporte également à des procédés de préparation de celles-ci ainsi qu'à leur utilisation pour la constitution de membranes de piles à combustible.

Ces particules ont pour caractéristique de présenter une capacité d'échange ionique particulièrement élevée, du fait qu'elles comportent des groupes échangeurs de protons apportés *via* les chaînes polymériques greffées. De ce fait, ces particules trouvent leur application dans l'élaboration de matériaux conducteurs protoniques, en particulier de matériaux destinés à entrer dans la constitution de membranes conductrices de protons, par exemple, pour piles à combustible, telles que les piles fonctionnant à H₂/air ou H₂/O₂ (connu sous l'abréviation PEMFC signifiant *« Proton Exchange Membrane Fuel Cell* ») ou fonctionnant au méthanol/air (connu sous l'abréviation DMFC signifiant « *Direct Methanol Fuel Cell »*), pour électrolyseurs, tels que les électrolyseurs chlore-soude, les électrolyseurs PEMEC (PEMEC signifiant « *Proton Exchange Membrane Electrolysis Cell* ») pour batteries à circulation d'électrolyseur (dites *« batteries redox flow* ») ou pour dispositifs de purification d'eau.

Ainsi, le domaine technique de l'invention peut être défini, de manière générale, comme celui des particules conductrices de protons et des matériaux les contenant.

Plus généralement encore, l'invention se situe dans le domaine des particules conductrices de protons utilisées dans la constitution de membranes conductrices, en particulier, pour des piles à combustible.

### ETAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le cœur de la pile et doivent, par conséquent, présenter de bonnes performances en matière de conduction protonique, ainsi qu'une faible perméabilité aux gaz réactants (H₂/air ou H₂/O₂ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères appartenant, par exemple, à la famille des polysulfones, des polyéthercétones, des polyphénylènes. Toutefois, il a été constaté, que ces polymères non fluorés se dégradent relativement rapidement dans un environnement de pile à combustible et leur durée de vie reste, pour le moment, insuffisante pour l'application PEMFC.

Des membranes présentant des propriétés plus importantes en matière de durée de vie sont des membranes obtenues à partir de polymères constitués d'une chaîne principale linéaire perfluorée et de chaînes latérales porteurs d'un groupe acide, tel que des groupes acide sulfonique. Parmi les plus connues, on peut citer les membranes commercialisées sous la dénomination NAFION® par la société Dupont de Nemours ou sous la dénomination Dow®, FLEMION® ou Aciplex par les sociétés Dow Chemicals et Asahi Glass. Ces membranes présentent de bonnes performances électrochimiques et une durée de vie intéressante mais néanmoins insuffisante pour les applications PEMFC. De plus, leur coût (plus de 500 euros/m²) reste prohibitif pour la commercialisation. Pour les applications DMFC, elles présentent une perméabilité au méthanol élevée, ce qui limite également leur utilisation avec ce type de combustible. Qui plus est, les monomères les constituant présentent une structure de type hydrophile/hydrophobe, qui les rend particulièrement sensibles aux phénomènes d'hydratation et de déshydratation. Ainsi, leur température de fonctionnement se situe typiquement vers 80°C, puisque au-delà les instabilités d'hydratation vieillissent prématurément les membranes.

Un réel besoin existe donc de stabiliser la conduction protonique de ces membranes autour de 100°C. Pour ce faire, certains auteurs se sont orientés vers le développement de membranes plus complexes comprenant en plus d'une matrice en polymère organique conducteur, des composés ou particules susceptibles d'apporter une conductivité supplémentaire. Lorsque les particules sont des particules minérales, ces membranes sont désignées notamment par la terminologie « membranes hybrides inorganiques-organiques ».

Ainsi, les brevets US 2005/0227135 et US 2005/0244697 décrivent l'introduction de composés inorganiques hydrophiles, afin d'améliorer le niveau d'hydratation des membranes à haute température (les composés inorganiques étant des agglomérats de particules d'oxydes métalliques ou de phosphates métalliques pour US 2005/0227135 ou des matériaux échangeurs de cations à base d'argile pour US 2005/0244697).

Néanmoins, même si ces formulations de membranes composites améliorent les conductivités protoniques des membranes autour de 100°C, elles restent insuffisantes pour satisfaire les critères de fonctionnement d'une pile à combustible à ces températures. Qui plus est, les matrices polymères accueillant ces composés inorganiques présentent déjà un bon niveau de conduction protonique.

Il a été proposé également, dans FR 2 917 733, des particules inorganiques (telles que des particules de silice) greffées, de manière covalente, par des polymères conducteurs de protons, tels que du poly-4-vinylbenzènesulfonate de sodium. Ces particules sont ensuite incorporées dans des matrices polymériques pour former un matériau composite pouvant constituer une membrane conductrice de protons pour piles à combustible.

Ces particules présentent une excellente capacité d'échange ionique. Elles présentent également la particularité d'être greffées par des polymères hydrosolubles. Ainsi, placées dans une phase aqueuse, les particules constituent une dispersion à l'échelle nanométrique, dont les chaînes polymères greffées sont solubilisées (en d'autres termes, les particules sont solvatées par les chaînes polymères), moyennant quoi le mélange des particules et de la phase aqueuse se présente visuellement sous forme d'une solution transparente. Dans un environnement de pile à combustible impliquant un milieu aqueux pour le transfert de protons, de telles particules ne peuvent être utilisées telles quelles pour constituer une membrane mais doivent être utilisées sous forme de matériaux composites, dans lesquelles elles constituent une charge piégée dans une matrice polymérique. En fonctionnement dans la pile à combustible, la membrane sert de passerelle pour le transfert de protons entre le compartiment anodique et le compartiment cathodique, le transfert étant assuré par des groupes conducteurs de protons, tels que des groupes -SO₃H, -PO₃H₂ ou -CO₂H. Pour atteindre des conductivités importantes, il convient que la membrane soit suffisamment hydratée, afin de former un réseau hydrophile au sein de celle-ci. Dès lors, le transfert des protons s'accompagne d'un phénomène d'électroosmose conduisant à la migration de molécules d'eau du compartiment anodique vers le compartiment cathodique. Cette eau s'ajoute à celle qui est créée au niveau du compartiment cathodique, lors des réactions de réduction de l'oxygène. Il s'ensuit un gradient de concentration en eau entre le compartiment cathodique, riche en eau et le compartiment anodique, pauvre en eau, qui génère une pression osmotique conduisant à des transferts d'eau du compartiment cathodique vers le compartiment anodique. Au cours de ces transferts, les polymères greffés à la surface des particules peuvent être amenés à se solubiliser. Dans ce cas, les transferts d'eau entre les compartiments anodique et cathodique génèrent une force motrice au sein des particules susceptible, malgré la phase solide constituée par le matériau inorganique constitutif du cœur des particules, de les faire migrer à la surface de la membrane conduisant ainsi à un appauvrissement de celle-ci et, à terme, à une diminution des performances de conductivité de celle-ci.

Les mêmes mécanismes sont mis en jeu dans des électrolyseurs, avec la particularité supplémentaire que, dans de tels dispositifs, les membranes sont totalement immergées dans une phase aqueuse, ce qui peut amplifier le phénomène d'élution des particules contenues dans les membranes.

Aussi, il existe donc un réel besoin en matière de particules conductrices de protons, qui puissent présenter à la fois une bonne conduction protonique tout en présentant une mobilité moindre lorsqu'elles sont utilisées dans des membranes conductrices de protons. En d'autres termes, il existe un besoin pour des particules conductrices de protons qui ne soient pas soumises à un risque d'élution dans une contexte de fonctionnement en milieu aqueux, tel que cela est le cas des piles à combustible et des électrolyseurs.

### EXPOSÉ DE L'INVENTION

Ainsi, l'invention a trait à des particules de silice liées à des chaînes polymériques constituées d'au moins un polymère comprenant au moins un motif répétitif styrénique fluoré porteur d'au moins un groupe conducteur de protons, éventuellement sous forme d'un sel, la liaison entre lesdites particules et chacune de ces chaînes se faisant *via* au moins un groupe espaceur organique.

Grâce au greffage des chaînes polymériques susmentionnées, les particules de silice peuvent présenter une capacité d'échange ionique importante (liée directement au nombre de groupes acides échangeurs de protons) et ne sont pas soumises au phénomène de solubilisation voire d'élution, lorsqu'elles sont soumises à un environnement aqueux, du fait que les chaînes polymères à base d'un polymère spécifique fluoré présentent un caractère non hydrosoluble.

En outre, les particules conformes à l'invention présentent, contrairement aux particules de l'art antérieur, un gonflement ou dilatation hydrique moindre (lequel gonflement peut être responsable d'un phénomène accéléré de vieillissement). En d'autres termes, les particules conformes à l'invention présentent une diminution de la reprise hydrique.

Selon l'invention, les particules de silice sont liées, *via* des groupes espaceurs organiques, à des chaînes polymériques spécifiques. Ceci signifie, en d'autres termes, que chacune des chaînes polymériques est greffée à une particule *via* au moins un groupe espaceur organique, ce qui signifie, autrement dit, que le groupe espaceur organique est lié de manière covalente par une de ses extrémités à une particule et, par une autre de ses extrémités, est lié, de manière covalente, à une chaîne polymérique.

Selon une autre formulation possible, si l'on nomme Y¹ le ou les motifs répétitifs styréniques fluorés porteurs d'au moins un groupe conducteur de protons, éventuellement sous forme d'un sel et X' un groupe espaceur organique, l'invention pourrait être définie également comme étant des particules liées, de manière covalente, à des greffons de formule suivante : 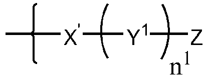 n¹ correspondant au nombre de répétition du motif répétitif Y¹ pris entre parenthèses, ce nombre de répétition étant un nombre positif au moins égal à 2, par exemple, allant de 2 à 3000, Z est un groupe terminal, par exemple, un atome d'halogène, tel qu'un atome de chlore, l'accolade indiquant que le groupe X' est lié directement de manière covalente à une particule de silicium.

On précise que, lorsque le polymère comprend plusieurs types de motifs répétitifs Y¹, les motifs répétitifs Y¹ peuvent être répartis de manière aléatoire, de manière alternée ou de manière séquencée, ce qui signifie respectivement, en d'autres termes, que les motifs répétitifs Y¹ sont répartis de façon aléatoire dans le polymère, les motifs répétitifs Y¹ sont alternés dans le polymère ou encore les motifs répétitifs Y¹ sont répartis sous forme de blocs (à savoir, un bloc d'un type de motif répétitif Y¹ et un bloc d'un autre type de motif répétitif Y¹, etc) dans le polymère.

Avant d'entrer plus en détail dans la présente description, nous précisons les définitions suivantes.

Par polymère, on entend, classiquement, au sens de l'invention, un composé constitué par l'enchaînement d'un ou plusieurs motifs répétitifs (la dénomination copolymère pouvant être utilisée lorsque le polymère comprend plusieurs types de motifs répétitifs).

Par motif répétitif, on entend, classiquement, au sens de l'invention, un groupe organique bivalent (c'est-à-dire un groupe formant pont) issu d'un monomère après polymérisation de celui-ci.

Dans le polymère comprenant au moins un motif répétitif styrénique fluoré porteur d'au moins un groupe conducteur de protons, éventuellement sous forme d'un sel, ledit ou lesdits motif(s) répétitif(s) styrénique(s) fluoré(s) peu(ven)t répondre à la formule (I) suivante : 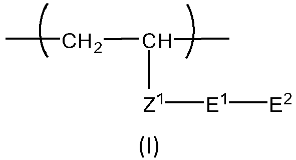
- Z¹ correspond à un groupe phénylène fluoré; et
- E¹ correspond à une liaison simple ou un groupe espaceur organique ;
- E² correspond à un groupe conducteur de protons, éventuellement sous forme d'un sel, tel qu'un groupe acide sulfonique, un groupe acide phosphonique ou un groupe acide carboxylique ;

Selon une variante, E² peut être lié directement à Z¹ et, plus spécifiquement, à un atome de carbone du groupe phénylène fluoré, lorsque E¹ est une liaison simple. Par exemple, E² peut être situé en position *para* sur ce groupe phénylène fluoré.

Selon une autre variante, E² peut être lié à Z¹ *via* un groupe espaceur organique E¹, lui-même étant lié à un atome de carbone du groupe phénylène fluoré, par exemple, en position *para* sur ce groupe phénylène fluoré.

E¹, lorsqu'il est un groupe espaceur organique, peut être un groupe alkylène, un groupe -S-alkylène- ou un groupe -O-alkylène (dans ces deux derniers cas, l'atome de S et l'atome d'O sont liés directement au groupe phénylène fluoré), lesdits groupes alkylènes pouvant comporter de 1 à 4 atomes de carbones, tels qu'un groupe méthylène, un groupe éthylène, un groupe *n*-propylène, un groupe *n*-butylène.

Plus spécifiquement, E¹, lorsqu'il est un groupe espaceur organique, peut être un groupe -O-propylène de formule (II) suivante : 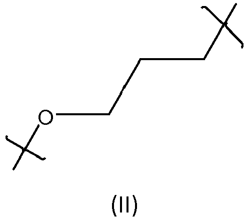 l'accolade au niveau de l'atome d'oxygène indiquant l'endroit par lequel l'atome d'oxygène est lié au groupe phénylène fluoré et l'accolade au niveau du dernier atome de carbone indiquant que cet atome de carbone est lié au groupe E².

Plus spécifiquement, E¹, lorsqu'il est un groupe espaceur organique, peut être un groupe S-propylène de formule (III) suivante : 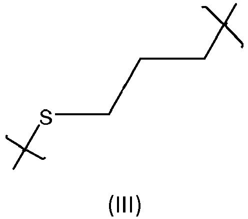 l'accolade au niveau de l'atome de soufre indiquant l'endroit par lequel l'atome d'oxygène est lié au groupe phénylène fluoré et l'accolade au niveau du dernier atome de carbone indiquant que cet atome de carbone est lié au groupe E².

Que ce soient pour le groupe E² (lorsque E¹ est une liaison simple) ou le groupe E¹ (lorsque E¹ est un groupe espaceur organique), ces groupes peuvent occuper l'un quelconque des atomes de carbone du groupe phénylène fluoré et en particulier, la position *para.*

Quelle que soit la variante retenue, le motif styrénique fluoré peut ne comporter que des atomes de fluor au niveau des atomes de carbone libres du cycle phénylène.

Un exemple de motif styrénique fluoré est un motif de formule (IV) suivante : 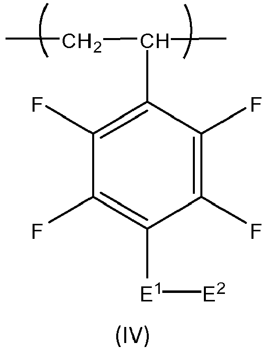 dans laquelle E¹, E² sont tels que définis ci-dessus.

Encore plus spécifiquement, des motifs styréniques fluorés pouvant entrer dans la constitution des chaînes polymériques greffées sont des motifs répondant aux formules (V) à (VII) suivantes : 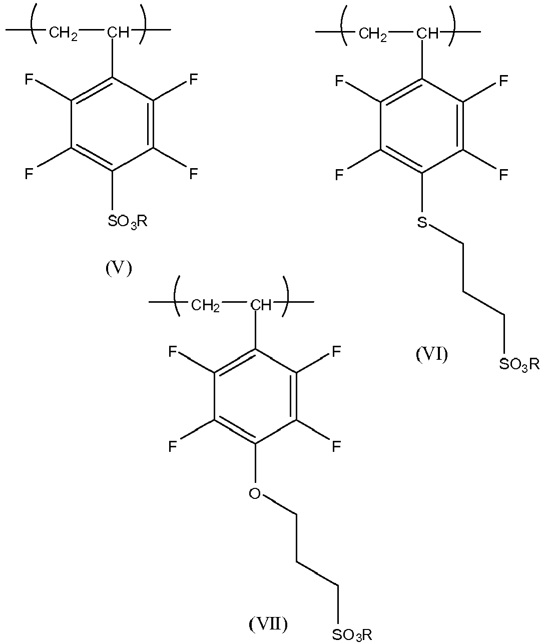 dans laquelle R est un atome d'hydrogène ou un cation (par exemple, un cation de métal alcalin).

Le ou les polymère(s) constitutif(s) des chaînes polymériques peu(ven)t être constitué(s) uniquement d'un ou plusieurs motifs répétitifs styréniques fluorés porteurs d'au moins un groupe conducteur de protons, éventuellement sous forme d'un sel voire même d'un seul type de motif répétitif styrénique fluoré porteur d'au moins un groupe conducteur de protons, éventuellement sous forme d'un sel, par exemple, un motif répétitif de formules (V), (VI) ou (VII) telles que définies ci-dessus, auquel cas on pourra qualifier ces polymères d'homopolymères. Les homopolymères peuvent être particulièrement avantageux, car les particules ainsi greffées peuvent présenter un gonflement en présence d'eau inférieur à 10%.

Par ailleurs, le ou les polymère(s) comprenant au moins un motif répétitif styrénique fluoré porteur d'au moins un groupe conducteur de protons, éventuellement sous forme d'un sel, peu(ven)t comprendre également au moins un motif répétitif styrénique non fluoré porteur d'au moins un groupe conducteur de protons, éventuellement sous forme d'un sel.

Autrement dit, si l'on nomme Y¹ le ou les motif(s) répétitif(s) styrénique(s) fluoré(s) porteur(s) d'au moins un groupe conducteur de protons, éventuellement sous forme d'un sel, Y² le ou les motif(s) répétitif(s) styrénique(s) non fluoré(s) porteur(s) d'au moins un groupe conducteur de protons et X' le groupe espaceur organique, l'invention pourrait être définie également comme étant des particules liées, de manière covalente, à des greffons de formule : 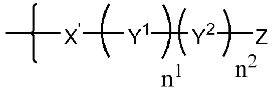 n¹ correspondant au nombre de répétition du motif répétitif pris entre parenthèses, ce nombre de répétition étant un entier positif au moins égal à 2, par exemple allant de 2 à 3000, n² correspondant au nombre de répétition du motif répétitif pris entre parenthèses, ce nombre de répétition étant égal à 0 ou étant un entier positif au moins égal à 2, par exemple, allant de 2 à 5000, Z est un groupe terminal, par exemple, un atome d'halogène, tel qu'un atome de chlore, l'accolade indiquant que le groupe X' est liée directement de manière covalente à une particule de silicium.

On précise que les motifs répétitifs Y¹ et Y² peuvent être répartis de manière aléatoire, de manière alternée ou de manière séquencée, ce qui signifie respectivement, en d'autres termes, que les motifs répétitifs Y¹ et Y² sont répartis de façon aléatoire dans le polymère, les motifs répétitifs Y¹ et Y² sont alternés dans le polymère ou encore les motifs répétitifs Y¹ et Y² sont répartis sous forme de blocs (à savoir, un bloc de motifs répétitifs Y¹ et un bloc de motifs répétitifs Y²) dans le polymère.

Ledit ou lesdits motif(s) répétitif(s) styrénique(s) non fluoré(s) peu(ven)t répondre à la formule (VIII) suivante : 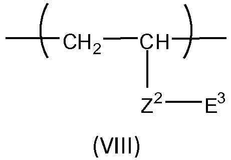 dans laquelle :
- Z² correspond à un groupe phénylène non fluoré ; et
- E³ correspond à un groupe conducteur de protons, éventuellement sous forme d'un sel, tel qu'un groupe acide sulfonique, un groupe acide phosphonique ou un groupe acide carboxylique.

Le groupe E³ peut occuper l'un quelconque des atomes de carbone du groupe phénylène non fluoré et en particulier, la position *para.*

Un motif répétitif styrénique non fluoré particulier est un motif répétitif issu de la polymérisation d'un monomère de la famille des acides styrènesulfoniques, lesquels acides peuvent être sous forme d'un sel, tel qu'un sel de sodium.

Plus spécifiquement, un exemple de motif répétitif styrénique non fluoré est un motif de formule (IX) suivante : 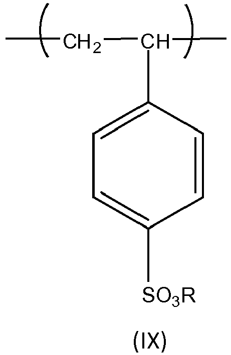 dans laquelle R est un atome d'hydrogène ou un cation (par exemple, un cation de métal alcalin).

Au sens de l'invention, chaque chaîne polymérique est liée aux particules de silice *via* au moins un groupe espaceur organique, c'est-à-dire un groupe organique formant pont entre les particules et une chaîne polymérique. Ce ou ces groupe(s) espaceur(s) organique(s) est (sont), classiquement, issu(s) d'un composé amorceur d'une polymérisation ATRP.

Le ou les groupe espaceur(s) organique(s) peu(ven)t être un groupe hydrocarboné se présentant sous forme d'une chaîne linéaire ou ramifiée, dans laquelle peuvent venir s'intercaler un ou plusieurs groupes aromatiques, comme, par exemple, un groupe phénylène.

Plus spécifiquement, le ou les groupe(s) espaceur(s) organique(s) peu(ven)t répondre à la formule (X) suivante :

-X¹-R¹-X²- (X)

dans laquelle :
- X¹ est le groupe lié de manière covalente à une particule ;
- R¹ est un groupe organique formant pont entre X¹ et X²; et
- X² est le groupe lié de manière covalente à une chaîne polymérique.

Plus spécifiquement, le groupe X¹ peut être un groupe de formule (XI) suivante : 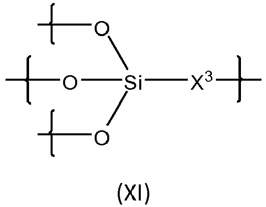
X³ étant un groupe alkylène, par exemple, un groupe comprenant de 1 à 15 atomes de carbone, tel qu'un groupe éthylène ;
les accolades présentes au niveau des atomes d'oxygène indiquant les endroits de liaisons avec la particule (en d'autres termes, le groupe silanoxy est lié à la particule par trois liaisons *via* les atomes d'oxygène) et l'accolade présente au niveau de X³ indiquant l'endroit par lequel s'effectue la liaison avec R¹.

Plus spécifiquement, le groupe X² peut être un groupe alkylène, par exemple, un groupe comprenant de 1 à 15 atomes de carbone, tel qu'un groupe méthylène.

Plus spécifiquement, le groupe R¹ peut être un groupe aromatique, tel qu'un groupe phénylène.

A titre d'exemple, le ou les groupe(s) espaceur(s) organique(s) peu(ven)t répondre ainsi à la formule (XII) suivante : 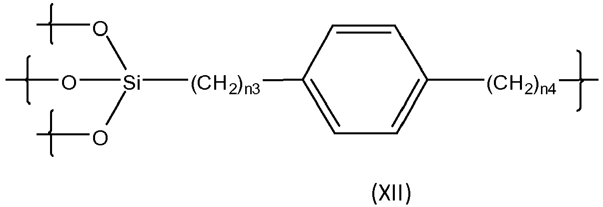 les accolades présentes au niveau des atomes d'oxygène indiquant les endroits de liaisons avec la particule (en d'autres termes, le groupe silanoxy est lié à la particule par trois liaisons *via* les atomes d'oxygène) et l'accolade présente au niveau de groupe -(CH₂)ₙ₄- indiquant l'endroit par lequel s'effectue la liaison avec la chaîne polymérique, tandis que n_{3 et} n₄ correspondent aux nombres de répétition des motifs pris entre parenthèses, ces nombres étant des entiers allant de 1 à 15. Par exemple, n₃ peut être égal à 2 et n₄ peut être égal à 1.

A titre d'exemples, des particules conformes à l'invention peuvent être :
- des particules en silice liées à des chaînes polymériques constituées par des polymères résultant de l'enchaînement d'un motif répétitif de formule (V) ou (VI) telle que définie ci-dessus, chacune desdites chaînes polymériques étant liée auxdites particules *via* au moins un groupe espaceur organique de formule (XII) telle que définie ci-dessus ;
- des particules en silice liées à des chaînes polymériques constituées par des copolymères résultant de l'enchaînement d'un motif répétitif de formule (V) telle que définie ci-dessus et d'un motif répétitif de formule (IX) telle que définie ci-dessus, chacune desdites chaînes polymériques étant liée auxdites particules *via* au moins un groupe espaceur organique de formule (XII) telle que définie ci-dessus ;
- des particules en silice liées à des chaînes polymériques constituées par des copolymères résultant de l'enchaînement d'un motif répétitif de formule (VI) telle que définie ci-dessus et d'un motif répétitif de formule (IX) telle que définie ci-dessus, chacune desdites chaînes polymériques étant liée auxdites particules *via* au moins un groupe espaceur organique de formule (XII) telle que définie ci-dessus.

Autrement dit, des particules spécifiques conformes à l'invention, peuvent être des particules de silice, liées, de manière covalente, à des greffons de formule : 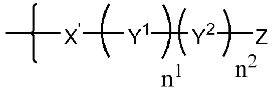 dans laquelle :
- X' est un groupe espaceur organique de formule (XII) telle que définie ci-dessus ;
- Y¹ est un motif répétitif de formule (V) ou (VI) telle que définie ci-dessus;
- Y² est un motif répétitif de formule (IX) telle que définie ci-dessus ;
- Z est un groupe terminal, par exemple, un atome d'halogène, tel qu'un atome de chlore ;
- n¹ et n² sont tels que définis ci-dessus.

On précise que les motifs répétitifs Y¹ et Y² peuvent être répartis de manière aléatoire, de manière alternée ou de manière séquencée, ce qui signifie respectivement, en d'autres termes, que les motifs répétitifs Y¹ et Y² sont répartis de façon aléatoire dans le polymère, les motifs répétitifs Y¹ et Y² sont alternés dans le polymère ou encore les motifs répétitifs Y¹ et Y² sont répartis sous forme de blocs (à savoir, un bloc de motifs répétitifs Y¹ et un bloc de motifs répétitifs Y²) dans le polymère.

Les particules de l'invention présentent, comme indiqué plus haut, une conduction protonique de par la nature des chaînes polymériques greffées et ne sont également pas sensibles au phénomène de solubilisation et d'élution de par la nature du ou des motifs répétitifs fluorés présents dans les chaînes polymériques.

Par conséquent, ces particules trouvent tout naturellement leur application dans le domaine des matériaux conducteurs de protons, tels que les matériaux composites conducteurs de protons utilisés, par exemple, pour des membranes conductrices de protons utilisables dans le domaine des piles à combustible.

L'invention a donc également pour objet un matériau composite conducteur comprenant une matrice polymérique au sein de laquelle sont dispersées les particules telles que définies ci-dessus.

La matrice polymérique peut être une matrice en un polymère non conducteur de protons et, plus spécifiquement, un polymère fluoré.

De tels polymères peuvent être des polymères fluorés tels qu'un polytétrafluoroéthylène (PTFE), un polyfluorure de vinylidène (PVDF), un copolymère tétrafluoroéthylène/éthylène (ETFE), un copolymère de fluorure de vinylidène et d'hexafluoropropène et leurs dérivés. Les polymères fluorés ont notamment pour avantage de présenter une bonne tenue mécanique ainsi qu'une bonne résistance chimique.

Le matériau composite selon l'invention se présente avantageusement sous forme d'un film, présentant par exemple une épaisseur de 10 à 300 µm.

Les matériaux composites susmentionnés peuvent être préparés par un procédé comprenant les étapes suivantes :
- mélanger, en présence d'un ou plusieurs solvants organiques, le ou les polymères constitutifs de la matrice avec des particules telles que définies ci-dessus ;
- former, à partir du mélange obtenu, d'un matériau composite par évaporation du ou des solvant(s).

Le mélange peut être coulé sur un support, par exemple, en verre, en alumine ou encore en polyéthylène, puis le matériau sous forme de film est formé par évaporation du ou des solvants. A l'issue de ce procédé, on obtient un matériau sous forme d'un film déposé sur le support. Le film obtenu peut être facilement désolidarisé du support, pour donner un film conducteur protonique auto-supporté.

On précise que les solvants susceptibles d'être utilisés dans le cadre de ce procédé peuvent être choisis parmi les solvants polaires aprotiques, tels que le diméthylformamide, le diméthylacétamide, le tétrahydrofurane, le diméthylsulfoxyde, ou encore des solvants chlorés comme le chloroforme, mais aussi des solvants tels que les alcools, les éthers, l'acétone.

A l'issue du procédé, il peut être opéré une étape d'acidification, le cas échéant, pour transformer les groupes conducteurs de protons sous forme de sels en groupe acides.

Du fait de leurs propriétés mécaniques, ces matériaux peuvent être mis en œuvre efficacement et conduire à des films minces suffisamment résistants pour être utilisés comme membranes pour pile à combustible.

Ces membranes se présentent avantageusement sous la forme de films minces, ayant, par exemple, une épaisseur de 10 à 300 micromètres.

Ces membranes présentent avantageusement une imperméabilité suffisante aux gaz réactants (tels que H₂ et O₂) et sont stables, de préférence, jusqu'à une température d'au moins 150°C.

De préférence, le matériau composite constitutif de la membrane comprend de 5 à 70% en masse de particules telles que définies précédemment.

On précise que les % ci-dessus sont exprimés par rapport à la masse totale du matériau composite.

Les membranes telles que définies ci-dessus peuvent être avantageusement incorporées dans des dispositifs de pile à combustible.

Ainsi, l'invention a trait également à un dispositif comprenant au moins un assemblage électrode-membrane-électrode, dans lequel la membrane est telle que définie ci-dessus.

Le dispositif de pile à combustible comprend généralement plusieurs assemblages électrode-membrane-électrode.

Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.

L'assemblage électrode-membrane-électrode est ensuite placé entre deux plaques assurant la conduction électrique et l'alimentation en réactifs aux électrodes. Ces plaques sont communément désignées par le terme de plaques bipolaires.

Enfin, l'invention a trait également à un procédé de préparation de particules telles que définies ci-dessus, ledit procédé comprenant les étapes suivantes :
a) une étape de mise en contact de particules de silice avec un composé amorceur d'une polymérisation du type ATRP, lequel composé comprend au moins un groupe apte à se greffer auxdites particules, moyennant quoi l'on obtient des particules greffées par des restes dudit composé amorceur ;
b) une étape de mise en contact desdites particules obtenues en a) avec :
   - au moins un monomère styrénique fluoré éventuellement porteur d'au moins un groupe conducteur de protons, éventuellement sous forme d'un sel ; et
   - éventuellement, au moins un monomère styrénique non fluoré porteur d'au moins un groupe conducteur de protons, éventuellement sous forme d'un sel ;
   moyennant quoi il y a polymérisation du type ARTP dudit ou desdits monomère(s) à partir des restes susmentionnés ;
c) lorsque le motif répétitif issu de la polymérisation du monomère styrénique fluoré n'est pas porteur d'au moins un groupe conducteur de protons, éventuellement sous forme d'un sel, une étape d'introduction sur ce motif répétitif d'au moins un groupe conducteur de protons, éventuellement sous forme d'un sel, le motif correspondant ainsi désormais à un motif répétitif styrénique fluoré porteur d'au moins un groupe conducteur de protons, éventuellement sous forme d'un sel.

Par polymérisation du type ATRP, on entend, une polymérisation radicalaire par transfert d'atomes (ATRP correspondant à l'abréviation de la terminologie anglaise *« Atom Transfer Radical Polymerization* »). Le mécanisme de ce type de polymérisation sera défini plus en détail ci-dessous.

Par composé amorceur d'une polymérisation du type ATRP, on entend un composé comprenant au moins un groupe apte à amorcer ce type de polymérisation, le composé amorceur de polymérisation conforme à l'invention comprenant, en outre, un groupe apte à se greffer (ou autrement dit, apte à se lier de manière covalente) aux particules susmentionnées, ce qui signifie en d'autres termes, que ce groupe réagit en présence des particules pour se fixer par covalence à la surface de celles-ci (on peut parler, aussi, de greffage), moyennant quoi l'amorceur subsiste sur lesdites particules sous forme d'un reste, étant entendu que ce reste comporte encore au moins un groupe apte à amorcer une polymérisation du type ATRP.

Comme mentionné ci-dessous, le procédé de l'invention comporte une étape de mise en contact de particules de silice avec un composé amorceur d'une polymérisation du type ATRP comprenant un groupe apte à se greffer auxdites particules, moyennant quoi l'on obtient des particules greffées par un reste dudit composé (étape a).

Cette étape de mise en contact peut comprendre une opération de dispersion des particules susmentionnées suivie d'une opération de mise en contact de la dispersion obtenue avec un composé amorceur tel que défini ci-dessus, lequel composé va réagir avec la particule pour former une liaison covalente.

Concernant le composé amorceur, celui-ci doit comporter au moins un groupe apte à se greffer à la surface desdites particules pour former une liaison covalente.

En particulier, les groupes du composé amorceur aptes à se lier à la surface des particules de silice pour former une liaison covalente, peuvent être choisis parmi les groupes de formules suivantes :
- COOR² avec R² représentant un atome d'hydrogène, un groupe alkyle comprenant de 1 à 30 atomes de carbone ou un groupe phényle ;
- COCI ;
- COCH₂CO-R² avec R² représentant un atome d'hydrogène, un groupe alkyle comprenant de 1 à 30 atomes de carbone ou un groupe phényle ;
- PO(OH)₂, -PO(OR³)(OH) ou -PO(OR³)(OR⁴) avec R³ et R⁴, identiques ou différents, représentant un groupe alkyle comprenant de 1 à 30 atomes de carbone ou un groupe phényle ;
- CO(NHOH) ;
- M(OR⁵)ₙ₋ₓ₋₁Z'ₓ avec x étant un entier allant de 0 à (n-1), M étant un métal ou un métalloïde, n étant un degré d'oxydation de M, R⁵ représentant un atome d'hydrogène, un groupe alkyle comprenant de 1 à 30 atomes de carbone, un groupe phényle, un cation métallique monovalent, ou un groupe de formule N⁺R²₄, avec R² représentant un atome d'hydrogène, un groupe alkyle comprenant de 1 à 30 atomes de carbone, ou un groupe phényle, et Z' représente un atome d'hydrogène, un groupe alkyle comprenant de 1 à 30 atomes de carbone, un groupe phényle ou un atome d'halogène ;
- SO₃M' avec M' représentant un atome d'hydrogène, un cation métallique monovalent ou un groupe de formule N⁺R²₄ avec R² représentant un atome d'hydrogène, un groupe alkyle comprenant de 1 à 30 atomes de carbone ou un groupe phényle ;
- B(OM')₂ avec M' représentant un atome d'hydrogène, un cation métallique monovalent ou un groupe de formule N⁺R²₄ avec R² représentant un atome d'hydrogène, un groupe alkyle comprenant de 1 à 30 atomes de carbone ou un groupe phényle ;
- OH;
et les combinaisons de ceux-ci.

Pour le groupe de formule -M(OR⁵)ₙ₋ₓ₋₁Z'ₓ telle que définie précédemment, M peut représenter un élément métallique, tel qu'un élément de transition de degré d'oxydation n donné ou un élément métalloïde tel que Si, Ge, Te de degré d'oxydation n donné, les degrés d'oxydation envisageables pour chaque élément métallique ou métalloïde étant connus de l'homme du métier.

A titre d'exemple de groupes conformes à cette définition, on peut citer le groupe de formule
- Si(OR⁵)₃₋ₓZ'ₓ avec x étant un entier allant de 0 à 3, Z' et R⁵ ayant les mêmes définitions que celles données ci-dessus.

Plus particulièrement, un groupe approprié peut être un groupe alcoxysilane, tel qu'un groupe triméthoxysilane, un groupe triéthoxysilane.

Le composé amorceur utilisé dans le cadre du procédé de l'invention est un composé amorceur d'une polymérisation du type ARTP, ce qui signifie, en d'autres termes, qu'il comprend aussi un groupe apte à engendrer une polymérisation, du type ARTP, ce groupe pouvant être un groupe -Z, tel qu'un atome d'halogène, comme le chlore. Ce groupe Z se retrouve, à l'issue de la polymérisation, comme groupe terminal du polymère.

Des composés amorceurs utilisables dans le cadre du procédé l'invention peuvent être des composés répondant à la formule (XIII) suivante :

X₁^{'}-R¹-X₂^{'} (XIII)

dans laquelle :
- X₁^{'} est un groupe comprenant un groupe apte à se lier, de manière covalente, ou autrement dit, à se greffer à une particule de silice (tel qu'un groupe de ceux listés ci-dessus) ;
- R¹ est un groupe organique formant pont entre X₁' et X₂'; et
- X₂' est un groupe comprenant un groupe apte à engendrer une polymérisation du type ATRP.

Plus spécifiquement, le groupe X₁^{'} peut être un groupe de formule (XIV) suivante :

(OR⁵)₃Si-X³- (XIV)

R⁵ et X³ étant tels définis ci-dessus (X³ étant un groupe alkylène, par exemple, comprenant de 1 à 15 atomes de carbone, par exemple, un groupe éthylène).

Plus spécifiquement, le groupe R¹ peut être un groupe aromatique, tel qu'un groupe phénylène, les groupes X₁^{'} et X₂^{'} pouvant être situé en position *ortho, para* ou *méta* l'un de l'autre, et avantageusement en position *para.*

Plus spécifiquement, le groupe X'² peut être un groupe alkylène, par exemple, un groupe comprenant de 1 à 15 atomes de carbone, tel qu'un groupe méthylène, ledit groupe alkylène étant porteur d'un groupe terminal, tel qu'un atome d'halogène, comme un atome de chlore.

A titre d'exemple, le composé amorceur peut répondre ainsi à la formule (XV) suivante : 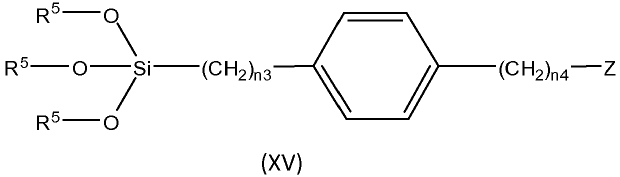 dans laquelle les R⁵, n₃ et n₄ sont tels que définis ci-dessus et Z est un atome d'halogène.

Encore plus spécifiquement, le composé amorceur de polymérisation ATRP peut être du chlorométhylphényléthyltriméthoxysilane de formule (XVI) suivante :

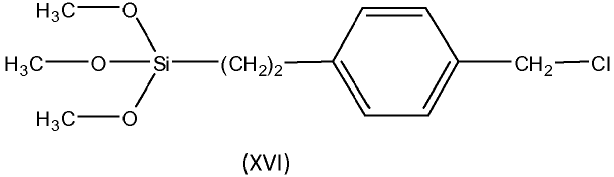

A l'issue de l'étape a), à titre d'exemple, lorsque le composé amorceur est le chlorométhylphényléthyltriméthoxysilane, les particules de silice sont des particules de silice liées, de manière covalente, à des restes dudit composé amorceur, ces restes répondant à la formule (XVII) suivante : 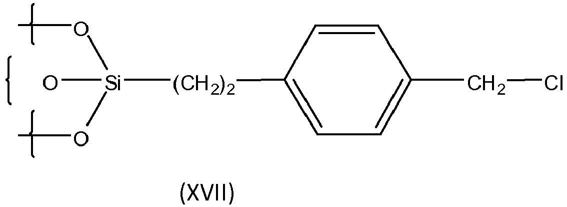 les accolades présentes au niveau des atomes d'oxygène indiquant les endroits de liaisons avec la particule (en d'autres termes, le groupe silanoxy est lié à la particule par trois liaisons *via* les atomes d'oxygène).

Après l'étape a), le procédé de l'invention comprend une étape de mise en contact desdites particules obtenues en a) avec :
- au moins un monomère styrénique fluoré éventuellement porteur d'au moins un groupe conducteur de protons, éventuellement sous forme d'un sel ; et
- éventuellement, au moins un monomère styrénique non fluoré porteur d'au moins un groupe conducteur de protons, éventuellement sous forme d'un sel ;
moyennant quoi il y a polymérisation du type ARTP dudit ou desdits monomère(s) à partir des restes susmentionnés.

Selon un mode de réalisation particulier de l'invention, l'étape b) met en jeu un monomère styrénique fluoré, qui n'est pas porteur d'au moins un groupe conducteur de protons, éventuellement sous forme d'un sel (ce qui signifie, en d'autres termes, que le procédé de l'invention comportera, en plus, la mise en œuvre de l'étape c)) et, éventuellement, un monomère styrénique non fluoré porteur d'au moins un groupe conducteur de protons, éventuellement sous forme d'un sel.

Cette étape est régie par les mécanismes de la polymérisation ATRP, qui fonctionne sur le principe de la formation réversible et rapide d'espèces dites « espèces dormantes » par création d'une liaison covalente avec une espèce radicalaire réactive.

Les restes de composé amorceur liés de manière covalente aux particules de silice comprennent au moins un groupe apte à amorcer la polymérisation ATRP, c'est-à-dire un groupe apte à se cliver au niveau d'une liaison pour former une première espèce radicalaire et une deuxième espèce radicalaire, la première espèce radicalaire réagissant ultérieurement, avec un premier carbone porteur d'une double liaison appartenant au(x) monomère(s), la deuxième espèce radicalaire se fixant à un deuxième atome opposé au premier carbone porteur de la double liaison.

En d'autres termes, ce mécanisme peut être résumé selon le schéma réactionnel suivant :

X³-X⁴ + C=C → X³-C-C-X⁴

X³-X⁴ correspondant au reste d'amorceur susmentionné avec X³ correspondant à la première espèce et X⁴ correspondant à la deuxième espèce, l'espèce X³-C-C-X⁴ étant une espèce dormante, qui peut croître par additions successives de monomères sur des radicaux libres, comme dans une polymérisation radicalaire classique, les radicaux libres étant créés par départ du groupe X⁴, qui se fixe ensuite après insertion du monomère à l'extrémité de la chaîne polymérique, laquelle constitue toujours une espèce dormante qui peut continuer à croître dès lors qu'il subsiste des monomères dans le milieu de polymérisation.

Pour des raisons de simplicité, nous avons représenté ci-dessus uniquement la double liaison du monomère.

Le monomère styrénique fluoré susceptible d'être utilisé dans le cadre de l'étape b) peut être un monomère répondant à la formule (XVIII) suivante : 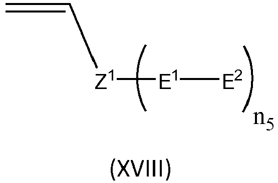
- Z¹ correspond à un groupe phénylène fluoré; et
- E¹ correspond à une liaison simple ou un groupe espaceur organique ;
- E² correspond à un groupe conducteur de protons, éventuellement sous forme d'un sel, tel qu'un groupe acide sulfonique, un groupe acide phosphonique ou un groupe acide carboxylique ;
- ns est égal à 0 ou à 1.

Lorsque n₅ est égal à 0, cela signifie que -E¹-E² n'existe pas et que la formule se résume à la formule (XIX) suivante : 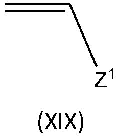 la position vacante laissée par l'absence de -E¹-E² sur le groupe Z¹ étant occupée par un atome de fluor sur ce groupe Z¹.

Lorsque n₅ est égal à 1, cela signifie que -E¹-E² est présent et que la formule peut se résumer ainsi à la formule (XX) suivante :

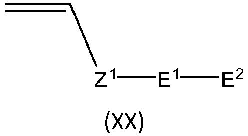

Selon une variante, comme déjà explicitée pour la définition des polymères en tant que tels, E² peut être lié directement à Z¹ et, plus spécifiquement, à un atome de carbone du groupe phénylène fluoré, lorsque E¹ est une liaison simple. Par exemple, E² peut être situé en position *para* sur ce groupe phénylène fluoré.

Selon une autre variante, E² peut être lié à Z¹ via un groupe espaceur organique E¹, lui-même étant lié à un atome de carbone du groupe phénylène fluoré, par exemple, en position *para* sur ce groupe phénylène fluoré.

E¹, lorsqu'il est un groupe espaceur organique, peut être un groupe alkylène, un groupe -S-alkylène- ou un groupe -O-alkylène (dans ces deux derniers cas, l'atome de S et l'atome d'O sont liés directement au groupe phénylène fluoré), lesdits groupes alkylènes pouvant comporter de 1 à 4 atomes de carbones, tels qu'un groupe méthylène, un groupe éthylène, un groupe propylène, un groupe butylène.

Plus spécifiquement, E¹, lorsqu'il est un groupe espaceur organique, peut être un groupe -O-propylène de formule (II) suivante : 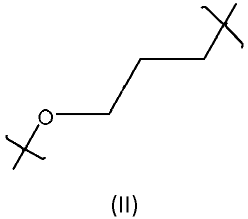 l'accolade au niveau de l'atome d'oxygène indiquant l'endroit par lequel l'atome d'oxygène est lié au groupe phénylène fluoré et l'accolade au niveau du dernier atome de carbone indiquant que cet atome de carbone est lié au groupe E².

Que ce soient pour le groupe E² (lorsque E¹ est une liaison simple) ou le groupe E¹ (lorsque E¹ est un groupe espaceur organique), ces groupes peuvent occuper l'un quelconque des atomes de carbone du groupe phénylène fluoré et en particulier, la position *para.*

Quelle que soit la variante retenue, le monomère styrénique fluoré peut ne comporter que des atomes de fluor au niveau des atomes de carbone libres du cycle phénylène.

Un exemple de monomère styrénique fluoré est un monomère de formule (XXI) suivante : 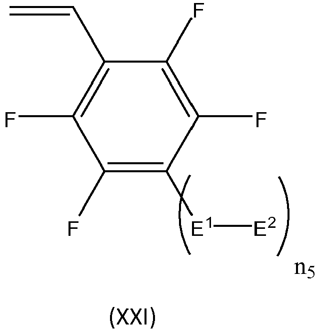 dans laquelle E¹, E², n₅ sont tels que définis ci-dessus, avec pour particularité que, lorsque n₅ est égal à 0, la position vacante laissée par l'absence -E¹-E² est occupée par un atome de fluor.

Encore plus spécifiquement, des exemples particuliers de monomères styréniques fluorés sont les monomères répondant aux formules (XXII) et (XXIII) suivantes : 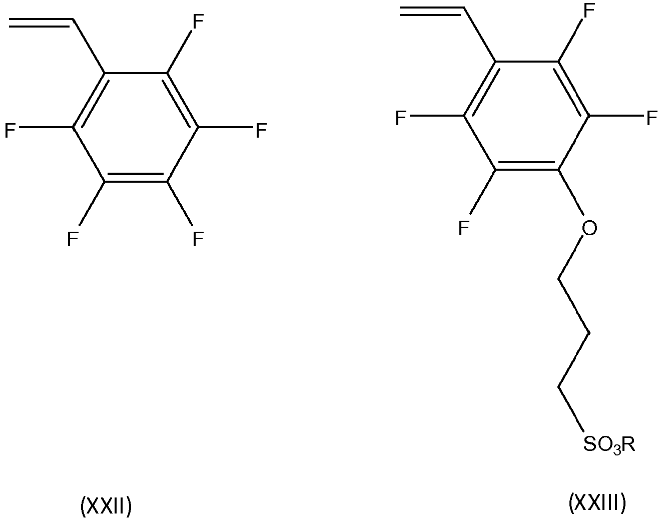 dans laquelle R est un atome d'hydrogène ou un cation (par exemple, un cation de métal alcalin).

Ces monomères, lorsqu'ils ne sont pas disponibles commercialement, peuvent faire l'objet d'une préparation préalable par des voies de synthèse classique de la chimie organique.

Ainsi, par exemple, lorsqu'il s'agit de préparer un monomère de formule (XXIII) ci-dessous, celui-ci peut être préparé par la réaction d'un tétrafluorostyrène hydroxylé avec, dans un premier temps, une base pour former un hydroxylate, lequel va réagir avec un composé sultone (plus spécifiquement, le 1,3-propanesultone) pour former le monomère susmentionné, le mécanisme de la réaction résidant en une addition nucléophile de l'hydroxylate avec le composé sultone provoquant ainsi une ouverture de cycle.

Lorsqu'il est présent, le monomère styrénique non fluoré peut répondre à la formule (XXIV) suivante : 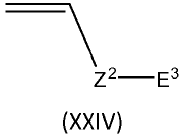 dans laquelle :
- Z² correspond à un groupe phénylène non fluoré ; et
- E³ correspond à un groupe conducteur de protons, éventuellement sous forme d'un sel, tel qu'un groupe acide sulfonique, un groupe acide phosphonique ou un groupe acide carboxylique.

Un monomère spécifique répondant à la définition donnée ci-dessus est un monomère acide styrènesulfonique, par exemple sous forme d'un sel, tel qu'un sel de sodium (auquel cas, on pourra parler de monomère styrènesulfonate de sodium).

Un exemple de ce type de monomère est un monomère de formule (XXV) suivante : 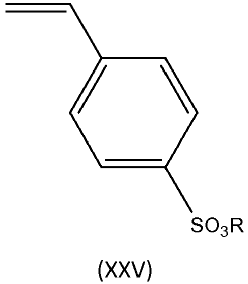 dans laquelle R est un atome d'hydrogène ou un cation (par exemple, un cation de métal alcalin ou un cation ammonium).

De préférence, R est un cation ammonium, tel qu'un cation tétraalkylammonium (par exemple, un cation tétraméthylammonium, un cation tétraéthylammonium, un cation tétra-*n*-butylammonium), l'utilisation d'un tel cation permettant une meilleure solubilisation du monomère dans le solvant de polymérisation, notamment lorsque celui-ci est du diméthylsulfoxyde. De manière générale, il peut être utilisé, pour R, tous types de cations organiques, qui permettent une bonne solubilisation du monomère dans le solvant de polymérisation.

Le ou les monomères styréniques fluorés éventuellement porteurs d'au moins un groupe conducteur de protons, éventuellement sous forme d'un sel et le ou les monomères styréniques non fluorés porteurs d'au moins un groupe conducteur de protons, éventuellement sous forme d'un sel peuvent être présents dans un rapport massique allant de 100/0 à 1/99, et plus spécifiquement 90/10.

Outre la présence d'un ou plusieurs monomères tels que définis ci-dessus, l'étape de préparation peut se dérouler, classiquement, en présence d'un sel métallique (par exemple, un halogénure métallique, tel qu'un halogénure de cuivre, comme le chlorure de cuivre) et d'un ligand organique.

On précise que, par ligand organique, on entend un composé organique comprenant au moins un doublet libre apte à venir combler une lacune électronique d'un élément métallique (en l'occurrence, dans notre cas, une lacune électronique sur l'élément métallique du sel susmentionné) pour former un complexe métallique.

A titre d'exemple, un ligand organique approprié peut être un composé appartenant à la famille des composés pyridines, tels que la bipyridine.

L'étape de préparation du polymère peut être réalisée, en outre, dans un solvant apolaire aprotique, tel qu'un solvant sulfoxyde, notamment lorsque la polymérisation fait intervenir un monomère styrénique fluoré, dont le ou les groupes protecteurs de protons sont introduits ultérieurement lors de l'étape b), pendant une température et durée appropriées pour engendrer la polymérisation, par exemple, une température de 80°C.

En outre, l'étape de préparation du polymère peut être suivie d'une étape d'hydrolyse destinée à protoner les groupes conducteurs de protons, lorsqu'ils se présentent sous forme d'un sel (soit, en d'autres termes, cette étape consiste à remplacer les cations du sel par des atomes d'hydrogène).

Les masses molaires moyennes des polymères obtenus à l'issue de l'étape b) peuvent aller de 2000 à 1 000 000 g/mol, de préférence de 10 000 à 300 000 g/mol.

Avantageusement, lorsque le polymère comprend au moins un motif répétitif issu de la polymérisation d'un ou plusieurs monomères styréniques non fluorés, la proportion dudit motif répétitif est moindre que celle du motif répétitif issu de la polymérisation du ou des monomères styréniques fluorés.

Après l'étape b), le procédé comprend, le cas échéant, lorsque le motif répétitif issu de la polymérisation du monomère styrénique fluoré n'est pas porteur d'au moins un groupe conducteur de protons, éventuellement sous forme d'un sel, une étape d'introduction sur ce motif répétitif d'au moins un groupe conducteur de protons, éventuellement sous forme de sel.

Ce groupe conducteur de protons peut être introduit directement sur le cycle phénylène du motif répétitif styrénique ou soit *via* un groupe espaceur organique, ce qui signifie que le groupe espaceur organique est directement lié au cycle phénylène et forme pont entre le cycle phénylène et le groupe conducteur de protons, éventuellement sous forme de sels.

Cette introduction peut être effectuée par toutes voies de synthèse chimiques appropriées.

Ainsi, à titre d'exemple, lorsque le motif répétitif est issu de la polymérisation du monomère pentafluorostyrène et que le groupe conducteur de protons destiné à être introduit est un groupe acide sulfonique lié directement au cycle phénylène, l'étape d'introduction peut comporter les opérations suivantes :
- une opération de sulfuration du cycle benzénique consistant en une substitution d'un atome de fluor par un groupe -S-R avec R représentant un atome d'hydrogène ou un cation, tel qu'un cation de métal alcalin ; et
- une opération d'oxydation du groupe sulfure pour former un groupe -SO₃R avec R étant tel que défini ci-dessus.

Plus précisément, l'opération de sulfuration peut consister à faire réagir, en milieu basique, de l'hydrogénosulfure de sodium hydraté dans du diméthylsulfoxyde, permettant l'introduction d'un groupe -S-Na, par exemple, en position *para.*

Quant à l'opération d'oxydation du groupe sulfure, elle peut s'effectuer, en présence d'un oxydant, tel que l'eau oxygénée.

En variante, lorsque le motif répétitif est issu de la polymérisation du monomère pentafluorostyrène et que le groupe conducteur de protons destiné à être introduit est un groupe acide sulfonique lié à un groupe espaceur organique, l'étape d'introduction peut comporter les opérations suivantes :
- une opération de sulfuration du cycle benzénique consistant en une substitution d'un atome de fluor par un groupe -S-R avec R représentant un atome d'hydrogène ou un cation, tel qu'un cation de métal alcalin ;
- une opération d'addition nucléophile du groupe -S-R sur un composé sultone engendrant ainsi une ouverture de cycle, moyennant quoi il y a formation d'un groupe -E¹-SO₃R, avec E¹ étant un groupe espaceur organique du type -S-alkylène.

Plus précisément, il peut s'agir d'une réaction d'addition nucléophile, en milieu basique, d'un groupe thiolate de sodium sur un composé 1,3-propanesultone, se traduisant par une ouverture de cycle et formant ainsi un groupe -S-CH₂-CH₂-CH₂-SO₃Na.

L'invention va être à présent décrite, par rapport aux exemples suivants donnés à titre illustratif et non limitatif.

### EXPOSÉ DÉTAILLÉ DE MODES DE RÉALISATION PARTICULIERS

### EXEMPLE 1

Cet exemple illustre la préparation des particules de silice liées de manière covalente à un amorceur de polymérisation du type ATRP selon le schéma réactionne suivant:

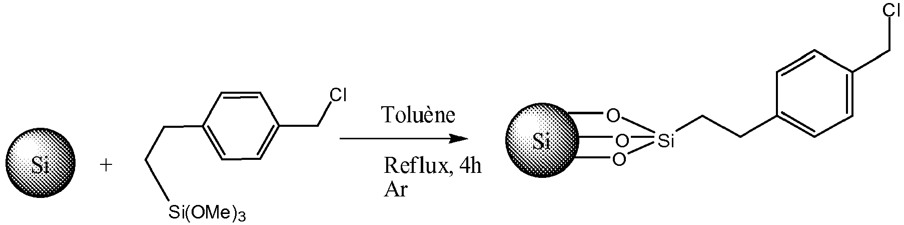

De la silice (6 g, soit environ 0,02 mol de silanol en surface) et du toluène (500 mL) sont introduits dans un bicol sous flux d'argon. Le mélange résultant est passé aux ultrasons, afin de bien disperser la silice dans le toluène. Puis le mélange est porté à reflux. Du chlorométhylphényléthyltriméthoxysilane (10 g, 0,036 mol) est introduite au goutte à goutte au mélange. Le reflux est laissé pendant 4 heures.

Les particules de silice fonctionnalisées sont ensuite isolées par centrifugation puis purifiées par deux cycles successifs de dispersion/centrifugation dans l'éthanol et l'acétone.

Les particules de silice récupérées sont ensuite séchées à l'étuve à 80°C pendant une nuit.

### EXEMPLE 2

Cet exemple illustre la polymérisation ATRP du 2,3,4,5,6-pentafluorostyrène à partir des particules de silice fonctionnalisées obtenue à l'exemple 1.

Le schéma réactionnel est le suivant:

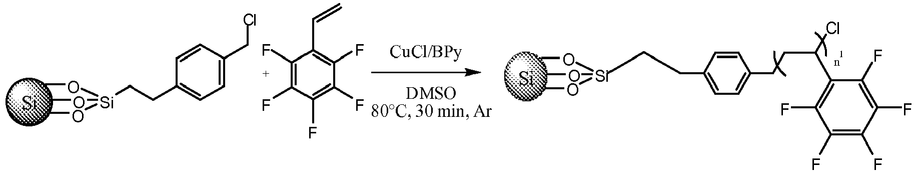

BPy correpondant à la bipyridine et DMSO au diméthylsulfoxyde et n¹ correspondant au nombre de répétition du motif répétitif pris entre parenthèses.

Le 2,3,4,5,6-pentafluorostyrène est préalablement distillé et le réacteur de polymérisation est chauffé sous vide (3 cycles de chauffage/refroidissement) avant utilisation.

Du diméthylsulfoxyde (DMSO) (200 mL) est dégazé sous vide en faisant buller de l'argon pendant 15 minutes dans un bicol. Le 2,3,4,5,6-pentafluorostyrène distillé (10 g) et la silice obtenue à l'issue de l'exemple 1 (2 g) sont ensuite introduits sous flux d'argon dans le bicol. Deux cycles de vide/argon sont effectués puis de l'argon est remis à buller dans le mélange.

Lorsque la silice est parfaitement dispersée dans le mélange, de la bipyridine (0,05 M) et du chlorure de cuivre (0,08 M) sont introduits sous flux d'argon. Trois cycles de vide/argon sont enfin réalisés.

Puis le bicol est mis en place sous agitation dans un bain d'huile préalablement chauffé à 80°C. Après environ 30 minutes de polymérisation, le mélange devient très visqueux et l'agitation devient difficile. La réaction est alors stoppée par mise à l'air du système. Le mélange passe d'une couleur marron à une couleur verte.

Le mélange est dilué avec du tétrahydrofurane (THF) pendant environ 2 heures, de manière à obtenir une solution liquide.

Les particules sont précipitées dans de l'isopropanol, solubilisées dans du THF, puis reprécipitées deux fois dans de l'eau sous forte agitation.

Les particules sont ensuite séchées à l'étude à 60°C pendant une nuit et se présentent sous forme d'un solide blanc.

### EXEMPLE 3

Cet exemple illustre la préparation d'un polymère sulfuré obtenu par sulfuration du polymère greffé sur la silice obtenu à l'exemple 2.

Le schéma réactionnel est le suivant:

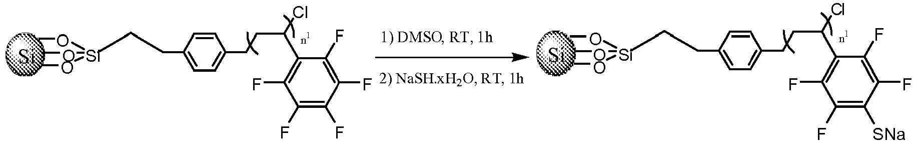

DMSO correspondant au diméthylsulfoxyde, RT correspondant à la température ambiante et n¹ correspondant au nombre de répétition du motif répétitif pris entre parenthèses.

Les particules greffées obtenues à l'exemple 2 sont dispersées dans du DMSO (200 mL) dans un ballon à température ambiante pendant 1 heure, les particules ainsi dispersées subissant un phénomène de gonflement. Puis de l'hydrogénosulfate hydraté (1,2 éq. par rapport au nombre de moles d'unités monomères) est introduit petit à petit dans le ballon toujours à température ambiante.

On observe une première transition colorimétrique du jaune pâle au bleu puis une disparition de la coloration bleue.

Le mélange réactionnel passe ensuite au bout de 30 minutes par une couleur verte et, en fin de réaction, le mélange présente une couleur bleue homogène.

Le mélange réactionnel présente, à la fin de la réaction, une viscosité très importante. Il est dilué dans de l'eau puis est précipité deux fois avec de l'isopropanol.

Le produit issu de la reprécipitation est séché par lyophilisation et se présente sous forme d'un solide jaune.

### EXEMPLE 4

Cet exemple illustre la préparation d'un polymère sulfoné obtenu par sulfonation du polymère greffé obtenu à l'exemple 3.

Le schéma réactionnel est le suivant:

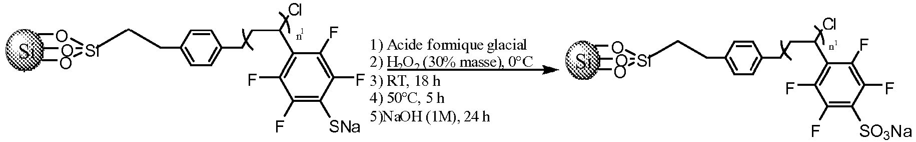

RT correspondant à la température ambiante et n correspondant au nombre de répétition du motif répétitif pris entre parenthèses.

Dans un ballon de 100 mL, le produit obtenu à l'exemple 3 (2 g) est mis en suspension dans de l'acide formique pendant 30 minutes. Le ballon est ensuite placé dans un bain de glace. Après 15 minutes, du peroxyde d'hydrogène (2 éq. par rapport au nombre d'unités monomères) est introduit goutte à goutte. Le mélange est ensuite placé à température ambiante pendant 18 heures puis à reflux pendant 5 heures.

Le produit est précipité dans de l'isopropanol puis est ajouté dans une solution aqueuse d'hydroxyde de sodium (1 M). Le mélange est ensuite agité pendant 24 heures. Le produit est filtré et rincé avec de l'isopropanol. Le produit final est placé à l'étuve à 60°C pendant une nuit.

### EXEMPLE 5

Cet exemple illustre la préparation d'un polymère sulfoné comportant un groupe espaceur organique soufré obtenu par sulfonation du polymère greffé de l'exemple 3 selon le schéma réactionnel suivant:

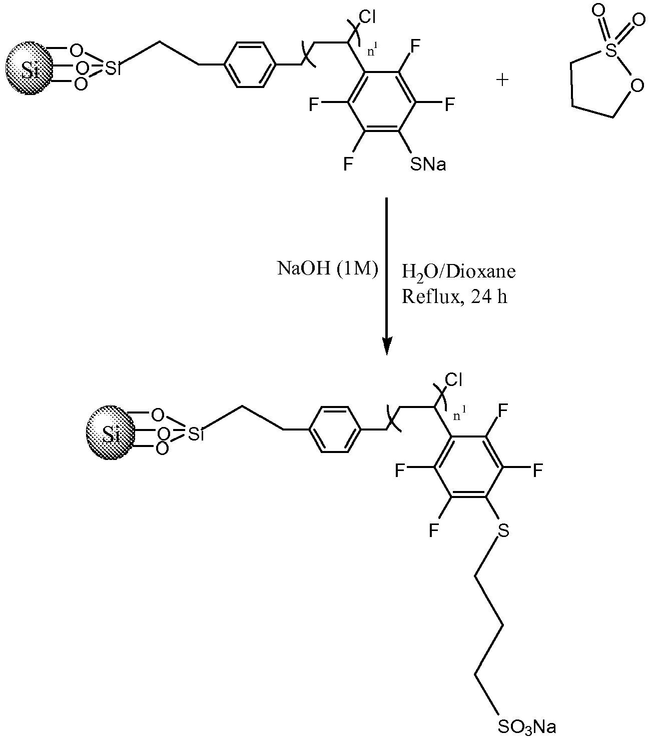

Dans un ballon, le produit obtenu à l'exemple 3 (1 g) est mis en suspension dans de la soude à 1M (25 mL) à température ambiante pendant 1 heure. Du 1,3-propanesultone (1,2 éq. par rapport au nombre de moles d'unités monomères) est dilué dans du dioxane (5 mL) puis introduit goutte à goutte à témpérature ambiante. Le mélange est ensuite mis au reflux pendant 24 heures.

Le mélange est filtré et lavé à l'eau. On obtient un gel incolore.

Le produit est séché à l'étuve à 60°C pendant une nuit.

### EXEMPLE 6

Cet exemple illustre la polymérisation ATRP du 2,3,4,5,6-pentafluorostyrène et du styrènesulfonate de tétra-n-butylammonium à partir des particules de silice fonctionnalisées obtenue à l'exemple 1.

Le schéma réactionnel est le suivant:

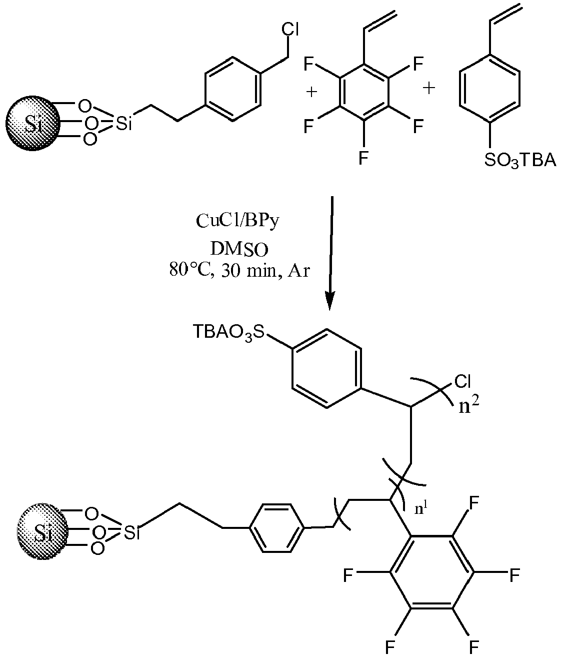

BPy correpondant à la bipyridine, DMSO au diméthylsulfoxyde, TBA correspondant à tétra-*n*-butylammonium et n¹ et n² correspondant aux nombres de répétition des motifs répétitifs pris entre parenthèses.

Le 2,3,4,5,6-pentafluorostyrène est préalablement distillé et le réacteur de polymérisation est chauffé sous vide (3 cycles de chauffage/refroidissement) avant utilisation.

Le styrènesulfonate de tétra-*n*-butylammonium est préparé par échange cationique entre l'hydrogène du tétra-*n*-butylammonium et l'ion sodium du styrènesulfonate de sodium.

Du diméthylsulfoxyde (DMSO) (200 mL) est dégazé sous vide en faisant buller de l'argon pendant 15 minutes dans un bicol. Le 2,3,4,5,6-pentafluorostyrène distillé (5 g), le styrènesulfonate de tétra-*n*-butylammonium (5 g) et la silice obtenue à l'issue de l'exemple 1 (2 g) sont ensuite introduits sous flux d'argon dans le bicol. Deux cycles de vide/argon sont effectués puis de l'argon est remis à buller dans le mélange.

Lorsque la silice est parfaitement dispersée dans le mélange, de la bipyridine (0,05 M) et du chlorure de cuivre (0,08 M) sont introduits sous flux d'argon. Trois cycles de vide/argon sont enfin réalisés.

Puis le bicol est mise en place sous agitation dans un bain d'huile préalablement chauffé à 80°C. Après environ 4 heures de polymérisation, le mélange devient très visqueux et l'agitation devient difficile. La réaction est alors stoppée par mise à l'air du système. Le mélange passe d'une couleur marron à une couleur verte.

Le mélange est dilué avec du tétrahydrofurane (THF) pendant environ 2 heures, de manière à obtenir une solution liquide.

Les particules sont précipitées dans de l'isopropanol, solubilisées dans du THF, puis reprécipitées deux fois dans de l'eau sous forte agitation.

Les particules sont ensuite séchées à l'étude à 60°C pendant une nuit et se présentent sous forme d'un solide blanc.

### EXEMPLE 7

Cet exemple illustre la préparation d'un polymère sulfuré obtenu par sulfuration du polymère greffé sur la silice obtenu à l'exemple 6.

Le schéma réactionnel est le suivant:

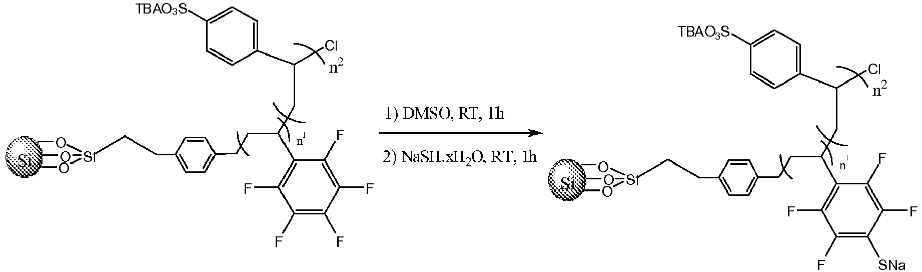

Les conditions de réalisation de cette préparation sont identiques à celles de l'exemple 3.

### EXEMPLE 8

Cet exemple illustre la préparation d'un polymère sulfoné obtenu par sulfonation du polymère greffé obtenu à l'exemple 7.

Le schéma réactionnel est le suivant:

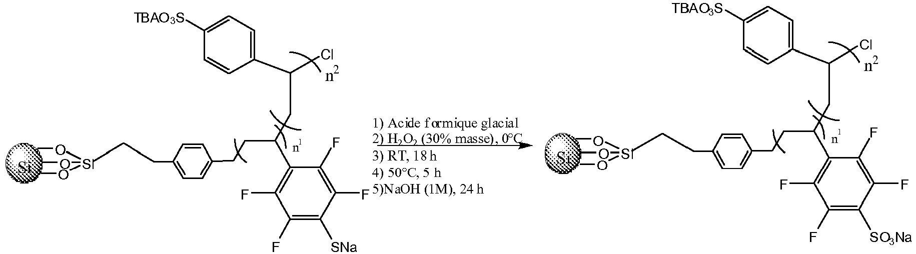

Les conditions de réalisation de cette préparation sont identiques à celles de l'exemple 4.

### EXEMPLE 9

Cet exemple illustre la préparation d'un polymère sulfoné comportant un groupe espaceur organique soufré obtenu par sulfonation du polymère greffé de l'exemple 7 selon le schéma réactionnel suivant:

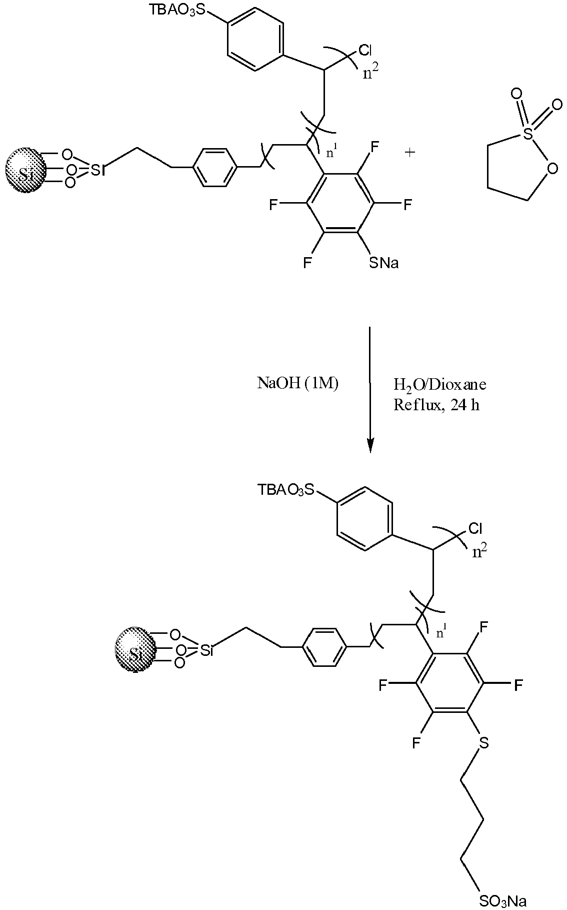

Les conditions de réalisation de cette préparation sont identiques à celles de l'exemple 5.

### EXEMPLE 10

Dans cet exemple est illustrée la préparation de membranes à partir des particules des exemples 4, 5, 8 et 9.

Pour ce faire, dans un Erlenmeyer de 50 mL, il est introduit un copolymère de fluorure de vinylidène et d'hexafluoropropène (connu sous l'abréviation poly(VDF-co-HFP) (1 g). Puis les particules concernées (1,631 g) et du diméthylsulfoxyde (26 g) sont introduits dans l'Erlenmeyer.

Le mélange résultant est chauffée sous agitation modérée à 60°C, afin d'accélérer la solubilisation du poly(VDF-co-HFP) et des particules. Le mélange est ensuite passée aux ultrasons pendant 45 minutes, afin de dissocier les agrégats de particules. Il en résulte une solution jaune.

La solution, après avoir été dégazée, est coulée sur une plaque en verre préalablement nettoyée d'abord à l'acétone puis au méthanol et enfin à l'acétone, la coulée s'effectuant à l'aide d'un applicateur manuel du type « *Hand coater* » équipé d'un entrefer de 500 µm. La plaque de verre, sur laquelle a été coulée la solution, est mise sur une plaque chauffante à 110°C, toujours sous hotte à flux laminaire, pendant quelques heures pour évaporer le solvant. L'utilisation de la hotte à flux laminaire pour la coulée et l'évaporation est justifiée pour éviter l'introduction de poussières dans les membranes.

Après avoir été décollée de la plaque de verre, la membrane est séchée puis est mise en contact, sous agitation modérée, avec une solution d'acide sulfurique concentrée à 98% à température ambiante pendant 4 jours.

La membrane est ensuite rincée trois fois avec de l'eau distillée et séchée à température ambiante entre plusieurs papiers absorbants.

Comme évoqué ci-dessus, ce protocole a été réalisé respectivement avec les particules obtenues aux exemples 4, 5, 8 et 9.

Les membranes obtenues avec ces particules ont été soumises à un test de vieillissement thermohydrique en les immergeant dans de l'eau à 80°C pendant 5 jours. Le relevé gravimétrique des membranes à l'issue de cette immersion ne fait apparaître aucune perte de masse de la membrane. Les analyses IR effectuées avec les membranes mettent, par ailleurs, en évidence la présence de fonctions organiques associées au polymère présent sur les particules.

Ces résultats attestent que la fluoration du polymère conducteur permet d'éviter l'élution des particules au sein des membranes.

A titre indicatif, les membranes ne comprenant pas de polymère fluoré perdent jusqu'à 30% de leur masse à l'issue du test de vieillissement thermohydrique.

## Revendications

1. Particules de silice liées à des chaînes polymériques constituées d'au moins un polymère comprenant au moins un motif répétitif styrénique fluoré porteur d'au moins un groupe conducteur de protons, éventuellement sous forme d'un sel, la liaison entre lesdites particules et chacune de ces chaînes se faisant *via* au moins un groupe espaceur organique.

2. Particules de silice selon la revendication 1, dans lesquelles le ou les motif(s) répétitif(s) styrénique(s) fluoré(s) répond(ent) à la formule (I) suivante : 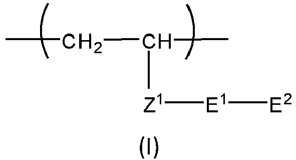
- Z¹ correspond à un groupe phénylène fluoré; et
- E¹ correspond à une liaison simple ou un groupe espaceur organique ;
- E² correspond à un groupe conducteur de protons, éventuellement sous forme d'un sel, tel qu'un groupe acide sulfonique, un groupe acide phosphonique ou un groupe acide carboxylique.

3. Particules de silice selon la revendication 2, dans lesquelles E¹ est une liaison simple.

4. Particules de silice selon la revendication 2, dans lesquelles E¹, lorsqu'il est un groupe espaceur organique, est un groupe alkylène, un groupe -S-alkylène- ou un groupe -O-alkylène.

5. Particules de silice selon l'une quelconque des revendications précédentes, dans lesquelles le motif styrénique fluoré est un motif de formule (IV) suivante : 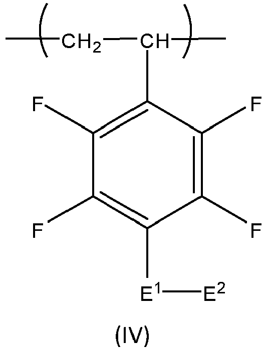 dans laquelle E¹, E² sont tels que définis à la revendication 2.

6. Particules de silice selon l'une quelconque des revendications précédentes, dans lesquelles le polymère comprenant au moins un motif répétitif styrénique fluoré porteur d'au moins un groupe conducteur de protons, éventuellement sous forme d'un sel, comprend également au moins un motif répétitif styrénique non fluoré porteur d'au moins un groupe conducteur de protons, éventuellement sous forme d'un sel.

7. Particules de silice selon la revendication 6, dans lesquelles le ou les motif(s) répétitif(s) styrénique(s) non fluoré(s) répond(ent) à la formule (VIII) suivante : 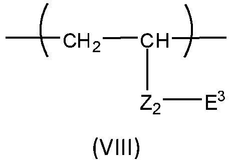 dans laquelle :
- Z² correspond à un groupe phénylène non fluoré ; et
- E³ correspond à un groupe conducteur de protons, éventuellement sous forme d'un sel, tel qu'un groupe acide sulfonique, un groupe acide phosphonique ou un groupe acide carboxylique.

8. Particules de silice selon l'une quelconque des revendications précédentes, dans lesquelles le ou les groupe(s) espaceur(s) organique(s) répond(ent) à la formule (X) suivante :
-X¹-R¹-X²- (X)
dans laquelle :
- X¹ est le groupe lié de manière covalente aux particules ;
- R¹ est un groupe organique formant pont entre X¹ et X²; et
- X² est le groupe lié de manière covalente à une chaîne polymérique.

9. Particules de silice selon la revendication 8, dans lesquelles le groupe X² est un groupe alkylène, par exemple, un groupe comprenant de 1 à 15 atomes de carbone, tel qu'un groupe méthylène.

10. Particules de silice selon la revendication 8 ou 9, dans lesquelles le groupe R¹ est un groupe aromatique, tel qu'un groupe phénylène.

11. Matériau composite conducteur de protons comprenant une matrice polymérique au sein de laquelle sont dispersées des particules telles que définies selon l'une quelconque des revendications 1 à 10.

12. Matériau composite conducteur selon la revendication 11, dans lequel la matrice polymérique est en un polymère non conducteur de protons.

13. Membrane de pile à combustible comprenant un matériau composite conducteur tel que défini selon la revendication 11 ou 12.

14. Dispositif de pile à combustible comprenant au moins un assemblage électrode-membrane-électrode, dans lequel la membrane est telle que définie selon la revendication 13.

15. Procédé de préparation de particules telles que définies à la revendication 1, ledit procédé comprenant les étapes suivantes :
a) une étape de mise en contact de particules de silice avec un composé amorceur d'une polymérisation du type ATRP, lequel composé comprend au moins un groupe apte à se greffer auxdites particules, moyennant quoi l'on obtient des particules greffées par des restes dudit composé amorceur ;
b) une étape de mise en contact desdites particules obtenues en a) avec :
- au moins un monomère styrénique fluoré éventuellement porteur d'au moins un groupe conducteur de protons, éventuellement sous forme d'un sel ; et
- éventuellement, au moins un monomère styrénique non fluoré porteur d'au moins un groupe conducteur de protons, éventuellement sous forme d'un sel ;
moyennant quoi il y a polymérisation du type ARTP dudit ou desdits monomère(s) à partir des restes susmentionnés ;
c) lorsque le motif répétitif issu de la polymérisation du monomère styrénique fluoré n'est pas porteur d'au moins un groupe conducteur de protons, éventuellement sous forme d'un sel, une étape d'introduction sur ce motif répétitif d'au moins un groupe conducteur de protons, éventuellement sous forme d'un sel, le motif correspondant ainsi désormais à un motif répétitif styrénique fluoré porteur d'au moins un groupe conducteur de protons, éventuellement sous forme d'un sel.

## Patentansprüche

1. Siliciumdioxidteilchen, die an Polymerketten gebunden sind, die aus zumindest einem Polymer bestehen, das zumindest eine Fluorstyrol-Wiederholungseinheit aufweist, die zumindest eine protonenleitende Gruppe, gegebenenfalls in Form eines Salzes, trägt, wobei die Bindung zwischen den Teilchen und jeder dieser Ketten über zumindest eine organische Abstandsgruppe erfolgt.

2. Siliciumdioxidteilchen nach Anspruch 1,
wobei die Fluorstyrol-Wiederholungseinheit(en) der folgenden Formel (I) entspricht (entsprechen): 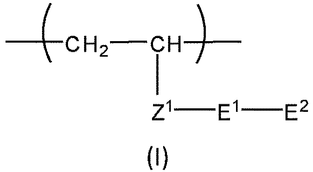 worin
- Z¹ einer fluorierten Phenylengruppe entspricht; und
- E¹ einer Einfachbindung oder einer organischen Abstandsgruppe entspricht;
- E² einer protonenleitenden Gruppe, gegebenenfalls in Form eines Salzes, wie z.B. einer Sulfonsäuregruppe, einer Phosphonsäuregruppe oder einer Carbonsäuregruppe, entspricht.

3. Siliciumdioxidteilchen nach Anspruch 2,
wobei E¹ eine Einfachbindung ist.

4. Siliciumdioxidteilchen nach Anspruch 2,
wobei E¹, wenn es eine organische Abstandsgruppe ist, eine Alkylengruppe, eine -S-Alkylengruppe oder eine -O-Alkylengruppe ist.

5. Siliciumdioxidteilchen nach einem der vorstehenden Ansprüche,
wobei die Fluorstyrol-Einheit eine Einheit der folgenden Formel (IV) ist: 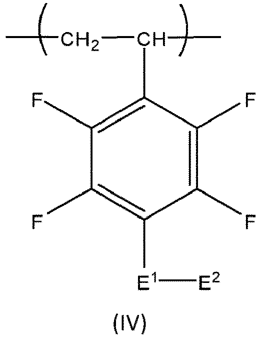 worin E¹, E² wie in Anspruch 2 definiert sind.

6. Siliciumdioxidteilchen nach einem der vorstehenden Ansprüche,
wobei das Polymer, das zumindest eine Fluorstyrol-Wiederholungseinheit enthält, die zumindest eine protonenleitende Gruppe, gegebenenfalls in Form eines Salzes, trägt, auch zumindest eine nicht-fluorierte Styrol-Wiederholungseinheit enthält, die zumindest eine protonenleitende Gruppe, gegebenenfalls in Form eines Salzes, trägt.

7. Siliciumdioxidteilchen nach Anspruch 6,
wobei die nicht-fluorierte(n) Styrol-Wiederholungseinheit(en) der folgenden Formel (VIII) entspricht (entsprechen): 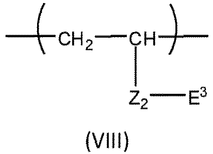 worin:
- Z² einer nicht-fluorierten Phenylengruppe entspricht; und
- E³ einer protonenleitenden Gruppe, gegebenenfalls in Form eines Salzes, wie z.B. einer Sulfonsäuregruppe, einer Phosphonsäuregruppe oder einer Carbonsäuregruppe, entspricht.

8. Siliciumdioxidteilchen nach einem der vorstehenden Ansprüche,
wobei die organische(n) Abstandsgruppe(n) der folgenden Formel (X) entspricht (entsprechen):
-X¹-R¹-X²- (X)
worin:
- X¹ die Gruppe ist, die kovalent an die Teilchen gebunden ist;
- R¹ eine organische Gruppe ist, die X¹ und X² überbrückt; und
- X² die Gruppe ist, die kovalent an eine Polymerkette gebunden ist.

9. Siliciumdioxidteilchen nach Anspruch 8,
wobei die Gruppe X² eine Alkylengruppe ist, zum Beispiel eine Gruppe, die 1 bis 15 Kohlenstoffatome enthält, wie etwa eine Methylengruppe.

10. Siliciumdioxidteilchen nach Anspruch 8 oder 9,
wobei die Gruppe R¹ eine aromatische Gruppe, wie etwa eine Phenylengruppe, ist.

11. Protonenleitendes Verbundmaterial, enthaltend eine Polymermatrix mit darin dispergierten Teilchen nach einem der Ansprüche 1 bis 10.

12. Leitendes Verbundmaterial nach Anspruch 11,
wobei die Polymermatrix aus einem nicht-protonenleitenden Polymer besteht.

13. Brennstoffzellenmembran, enthaltend ein leitendes Verbundmaterial nach Anspruch 11 oder 12.

14. Brennstoffzellenvorrichtung, enthaltend zumindest eine Elektrode-Membran-Elektrode-Anordnung, wobei die Membran nach Anspruch 13 ausgeführt ist.

15. Verfahren zur Herstellung von Teilchen nach Anspruch 1,
wobei das Verfahren die folgenden Schritte umfasst:
a) einen Schritt des Inkontaktbringens von Siliciumdioxidteilchen mit einer Verbindung zum Initiieren einer Polymerisation vom ATRP-Typ, wobei die Verbindung zumindest eine Gruppe enthält, die in der Lage ist, sich auf die Teilchen zu pfropfen, wodurch Teilchen erhalten werden, die durch Reste der Initiatorverbindung gepfropft sind;
b) einen Schritt des Inkontaktbringens der in a) erhaltenen Teilchen mit:
- zumindest einem fluorierten Styrolmonomer, das gegebenenfalls zumindest eine protonenleitende Gruppe, gegebenenfalls in Form eines Salzes, trägt; und
- gegebenenfalls zumindest einem nicht-fluorierten Styrolmonomer, das zumindest eine protonenleitende Gruppe, gegebenenfalls in Form eines Salzes, trägt;
wodurch eine Polymerisation des ARTP-Typs des Monomers bzw. der Monomere aus den oben genannten Resten erfolgt;
c) wenn die aus der Polymerisation des fluorierten Styrolmonomers resultierende Wiederholungseinheit nicht zumindest eine protonenleitende Gruppe, gegebenenfalls in Form eines Salzes, trägt, einen Schritt der Einführung zumindest einer protonenleitenden Gruppe, gegebenenfalls in Form eines Salzes, in diese Wiederholungseinheit, wobei die Einheit dann somit einer Fluorstyrol-Wiederholungseinheit entspricht, die zumindest eine protonenleitende Gruppe, gegebenenfalls in Form eines Salzes, trägt.

## Claims

1. Particles of silica bonded to polymer chains constituted of at least one polymer comprising at least one fluorinated styrenic repetitive unit carrying at least one proton-conducting group, optionally in the form of a salt, with the bond between said particles and each one of these chains being carried out *via* at least one organic spacer group.

2. Particles of silica according to claim 1, wherein the fluorinated styrenic repetitive unit or units have the following formula (I): 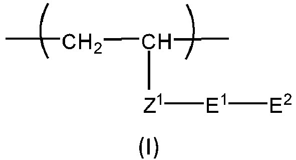
- Z¹ corresponds to a fluorinated phenylene group; and
- E¹ corresponds to a single bond or an organic spacer group;
- E² corresponds to a proton-conducting group, optionally in the form of a salt, such as a sulphonic acid group, a phosphonic acid group or a carboxylic acid group.

3. Particles of silica according to claim 2, wherein E¹ is a single bond.

4. Particles of silica according to claim 2, wherein E¹, when it is an organic spacer group, is an alkylene group, a -S-alkylene- group or an -O-alkylene group.

5. Particles of silica according to any preceding claim, wherein the fluorinated styrenic unit is a unit having the following formula (IV): 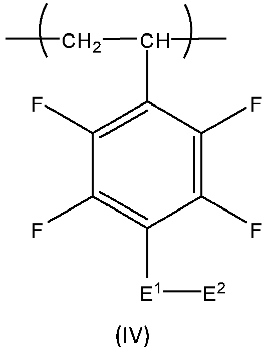 wherein E¹, E² are such as defined in claim 2.

6. Particles of silica according to any preceding claim, wherein the polymer comprising at least one fluorinated styrenic repetitive unit carrying at least one proton-conducting group, optionally in the form of a salt, also comprises at least one non-fluorinated styrenic repetitive unit carrying at least one proton-conducting group, optionally in the form of a salt.

7. Particles of silica according to claim 6, wherein the non-fluorinated styrenic repetitive unit or units have the following formula (VIII): 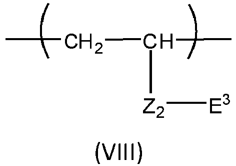 wherein:
- Z² corresponds to a non-fluorinated phenylene group; and
- E³ corresponds to a proton-conducting group, optionally in the form of a salt, such as a sulphonic acid group, a phosphonic acid group or a carboxylic acid group.

8. Particles of silica according to any preceding claim, wherein the organic spacer group or groups have the following formula (X):
-X¹-R¹-X²- (X)
wherein:
- X¹ is the group covalently bonded to the particles;
- R¹ is an organic group forming a bridge between X¹ and X²; and
- X² is the group covalently bonded to a polymer chain.

9. Particles of silica according to claim 8, wherein the group X² is an alkylene group, for example, a group comprising from 1 to 15 carbon atoms, such as a methylene group.

10. Particles of silica according to claim 8 to 9, wherein the group R¹ is an aromatic group, such as a phenylene group.

11. Proton-conducting composite material comprising a polymeric matrix within which particles are dispersed such as defined according to any of claims 1 to 10.

12. Conducting composite material according to claim 11, wherein the polymeric matrix is a non-proton-conducting polymer.

13. Fuel cell membrane comprising a conducting composite material such as defined according to claim 11 or 12.

14. Fuel cell device comprising at least one electrode-membrane-electrode assembly, wherein the membrane is such as defined according to claim 13.

15. Method for preparing particles such as defined in claim 1, said method comprising the following steps:
a) a step of putting into contact particles of silica with an initiating compound of a polymerisation of the ATRP type, said compound comprises at least one group able to be grafted to said particles, whereby particles grafted by the remainder of said initiating compound are obtained;
b) a step of putting into contact said particles obtained in a) with:
- at least one fluorinated styrenic monomer optionally carrying at least one proton-conducting group, optionally in the form of a salt; and
- optionally, at least one non-fluorinated styrenic monomer carrying at least one proton-conducting group, optionally in the form of a salt;
whereby there is a polymerisation of the ARTP type of said monomer or monomers from the aforementioned remainders;
c) when the repetitive unit coming from the polymerisation of the fluorinated styrenic monomer is not carrying at least one proton-conducting group, optionally in the form of a salt, a step of introducing on this repetitive unit of at least one proton-conducting group, optionally in the form of a salt, with the unit thus corresponding to a fluorinated styrenic repetitive unit carrying at least one proton-conducting group, optionally in the form of a salt.
